# EUROPEAN PATENT APPLICATION

(11) **EP 1 535 667 A1**
(43) Date of publication of application: **01.06.2005**
(21) Application number: 04027874.9
(22) Date of filing: 24.11.2004
(51) Int. Cl.: B01L 3/00, G01N 21/05, G01N 1/00, G01N 33/487

(54) **Analyzer, assay cartridge and analyzing method**

(30) Priority: 28.11.2003 JP 2003400059; 28.11.2003 JP 2003400087
(71) Applicant: Sysmex Corporation, Kobe-shi, Hyogo 651-0073 (JP)
(72) Inventor: Mototsu, Kazunori, Kobe-shi Hyogo 655-0854 (JP)
(74) Representative: HOFFMANN - EITLE

(57) **Abstract**

Analyzers are disclosed that comprises an assay cartridge (1) comprising a mixture measuring chamber (7) for receiving a mixture of a sample and a dilution fluid, and a detector (9) for detecting a signal from the mixture supplied from the mixture measuring chamber (7), the mixture measuring chamber (7) having a predetermined capacity, and an amount of the mixture supplied to the detector (9) being substantially equal to the capacity of the mixture measuring chamber; and an analyzing unit comprising a controller for analyzing the signal detected by the detector; wherein the assay cartridge (1) is detachably mountable to the analyzing unit. An assay cartridges and analyzing method are also described.

## Description

### FIELD OF THE INVENTION

The present invention relates to an analyzer for analyzing fluid samples by loading the removable assay cartridge provided with a detector, an assay cartridge loadable into the analyzer, and analyzing method for analyzing fluid samples using the assay cartridge.

### BACKGROUND

Analyzers for analyzing fluid samples often use an assay device provided with a maintenance-free detector which is installed in a replaceable cartridge.

For example, United States Laid-Open Patent Publication No. 2002-172617 discloses an assay unit provided with a rotating valve for preparing analysate by measuring a fixed quantity of sample and mixing the sample and a reagent, and an electrical resistance measuring part for detecting a signal from a prepared analysate. This assay unit is removably installed in the assay device.

In the assay unit disclosed in United States Laid-Open Patent Publication No. 2002-172617, a predetermined quantity of analysate is passed through a small hole in the electrical resistance measuring part by means of the suction operation perforemd for a specific time by a syringe pump provided in the assay device. Then, the number of white blood cells contained in the analysate that has passed through the small hole is counted. That is, in the assay unit, the quantity of analysate is measured by the suction time of the syringe pump.

Before the suction operation of the syringe pump in this assay unit, however, the flow path is filled with air rather than fluid from the syringe pump to the electrical resistance measuring part. This air is greatly expanded compared to the fluid when the suction force is applied. Accordingly, a problem arises inasmuch as the quantity of analysate actually transferred and which passes through the small hole is not stable since an amount of expanded air is included even when the syringe pump operates a predetermined length of time. Therefore, in conventional assay units the quantity of analysate used for signal detection is unstable, and errors may occur in the analysis result.

### SUMMARY

The scope of the present invention is defined solely by the appended claims, and is not affected to any degree by the statements within this summary.

An object of one embodiment of the present invention is to improve an accuracy of a result of analysis.

The first aspect of the present invention relates to an analyzer comprising an assay cartridge comprising a mixture measuring chamber for receiving a mixture of a sample and a dilution fluid, and a detector for detecting a signal from the mixture supplied from the mixture measuring chamber, the mixture measuring chamber having a predetermined capacity, and an amount of the mixture supplied to the detector being substantially equal to the capacity of the mixture measuring chamber; and an analyzing unit comprising a controller for analyzing the signal detected by the detector; wherein the assay cartridge is detachably mountable to the analyzing unit.

The second aspect of the present invention relates to a cartridge comprising a mixture measuring chamber for receiving a mixture of a sample and a dilution fluid, the mixture measuring chamber having a predetermined capacity; and a detector for detecting a signal from the mixture supplied from the mixture measuring chamber, an amount of the mixture supplied to the detector being substantially equal to the capacity of the mixture measuring chamber.

The third aspect of the present invention relates to analyzing method embodying comprising a step of mounting an assay cartridge, which comprises a mixture measuring chamber having a predetermined capacity and a detector for detecting a signal from a mixture of a sample and a reagent, in an analyzer which comprises a controller for analyzing the signal detected by the detector; a step of introducing the mixture to the mixture measuring chamber; a step of supplying the mixture from the mixture measuring chamber to the detector; a step of detecting a signal from the mixture by the detector; and a step of analyzing the signals by the controller, wherein an amount of the mixture supplied to the detector is substantially equal to the capacity of the mixture measuring chamber.

The fourth aspect of the present invention relates to an analyzer comprising an assay unit, which comprises an assay cartridge, which comprises a mixture receptacle having an opening on the inner wall near the base and capable of accommodating a mixture of sample and reagent; a projection provided on the base of the mixture receptacle and extending upward from the base; and a detector for detecting a signal from the mixture supplied through the opening; and an analyzing unit, which comprises a controller for analyzing the signal detected by the detector; wherein the assay cartridge is detachably mountable to the analyzing unit.

The fifth aspect of the present invention relates to a cartridge comprising a mixture receptacle capable of accommodating a mixture of a sample and reagent, and comprising an opening on the inner wall near the base; a projection provided on the base of the mixture receptacle and extending upward from the base; and a detector for detecting a signal from the mixture supplied through the opening.

### BRIEF DESCRIPTION OF THE DRAWINGS

Fig. 1 is a perspective view of an embodiment of the assay cartridge of the present invention;
Fig. 2 is a front view of an embodiment of the assay cartridge of the present invention;
Fig. 3 is a back view of an embodiment of the assay cartridge of the present invention;
Fig. 4 is a top view of an embodiment of the assay cartridge of the present invention;
Fig. 5 is a bottom view of an embodiment of the assay cartridge of the present invention;
Fig. 6 is a front view of an embodiment of the rotating valve of the present invention;
Fig. 7 is a top view of an embodiment of the rotating valve of the present invention;
Fig. 8 is a cross section view on the A-A arrow;
Fig. 9 illustrates the operation of an embodiment of the rotating valve of the present invention;
Fig. 10 is a cross section view on the B-B arrow of Fig. 2;
Fig. 11 is a cross section view on the C-C arrow of Fig. 10;
Fig. 12 is a cross section view on the D-D arrow of Fig. 2;
Fig. 13 is a perspective view of an embodiment of the analyzing unit of the present invention;
Fig. 14 is a block diagram showing the structure of an embodiment of the analyzer of the present invention in which an assay cartridge is loaded in the analyzing unit;
Figs. 15 and 16 are flow charts showing the operation of an embodiment of the analyzer of the present invention; and
Figs. 17 through 27 illustrate the conditions of an embodiment of the assay cartridge of the present invention.

### DETAILED DESCRIPTION OF THE PREFERRED EMBODIEMNTS

The preferred embodiments of the present invention are described hereinafter.

### 1. Structure of the Assay Cartridge Body

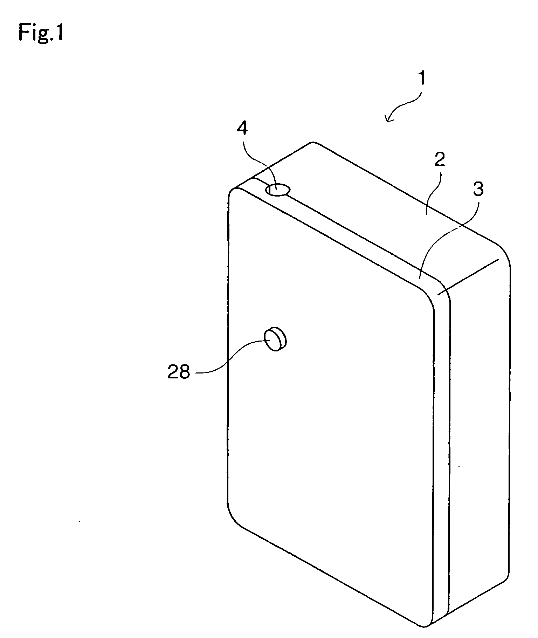

As shown in Fig. 1, an assay cartridge 1 is provided with a first component 2 and a second component 3. The first and second components are formed of transparent resin, for example, acrylic resin and polycarbonate resin mixed with antistatic agent, and the components are mutually adhered one to another with an air-tight seal via high-frequency welding.

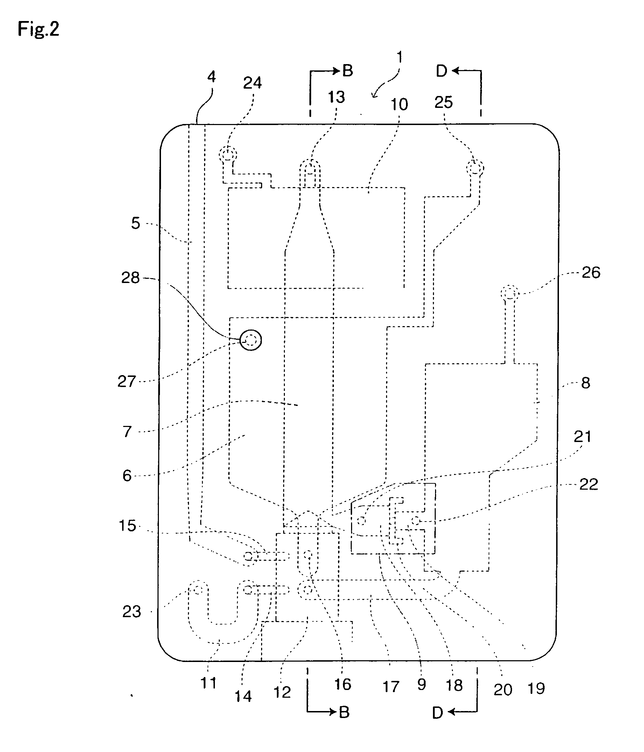

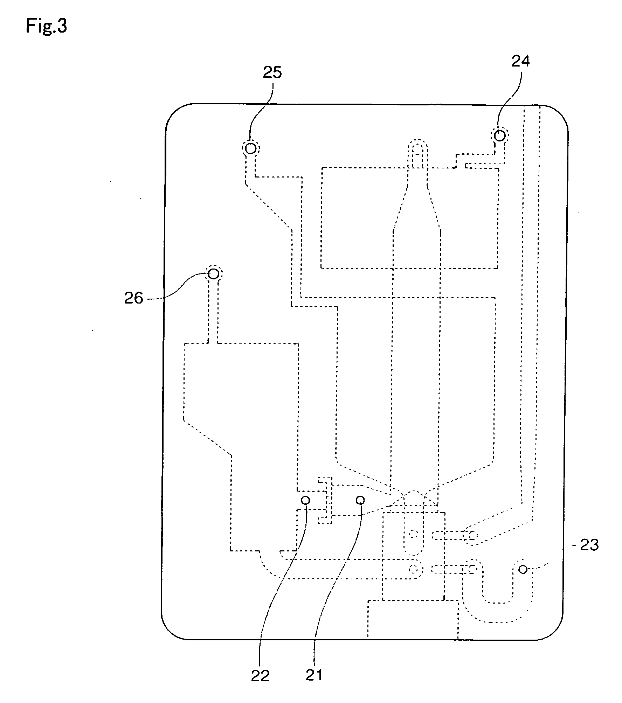

As shown in Figs. 2 and 3, the assay cartridge 1 is internally provided with a long and slender sample receptacle 5 having a capacity of 200 µL and extending downward in a vertical direction and further having an opening 4 at the top, reagent compartment 6, mixture measuring chamber 7, mixture compartment (hemoglobin detector) 8, detector 9, overflow receptacle 10, excess sample collector 11, and rotating valve 12. The bottom end of the sample receptacle 5 is connected to the rotating valve 12 through a flow path 15. One of the ends of the U-shaped excess sample collector 11 is connected to the rotating valve 12 through a flow path 14, and the other end is connected to the pump connector 23.

The base of the reagent compartment 6 is connected to the rotating valve 12 through a flow path 16, and the base of the mixture compartment 8 is connected to the rotating valve 12 through a flow path 17. Furthermore, the base of the mixture measuring chamber 7 is connected to the mixture compartment 8 by parallel flow paths 18 and 19. A pellet (gate element) 20 is inserted between the flow paths 18 and 19, and electrodes 21 and 22 are respectively exposed in the flow paths 18 and 19. The detector 9 is formed by the flow paths 18 and 19, electrodes 21 and 22, and the pellet 20. The top end of the mixture measuring chamber 7 is connected to the top of the overflow receptacle 10 through a flow path 13. The top of each of the overflow receptacle 10, reagent compartment 6, and mixture compartment 8 respectively connected to the pump connectors 24, 25, and 26 on the back side (Fig. 3).

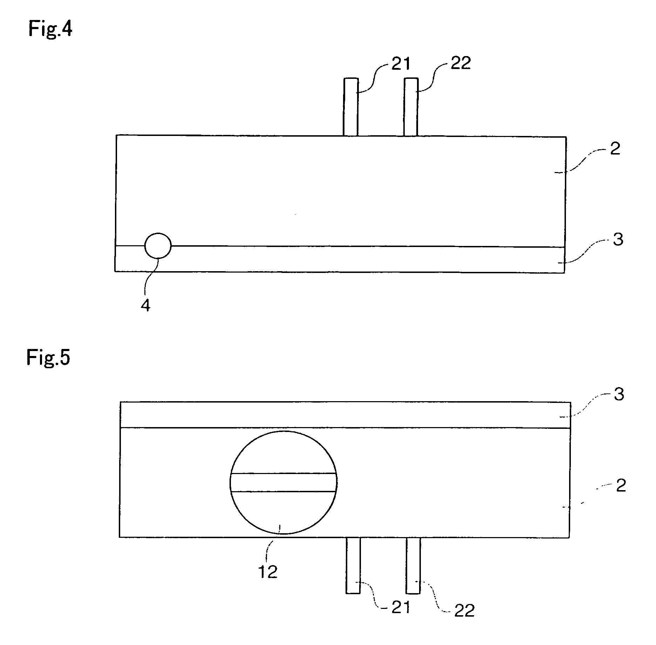

A reagent injection port 27 which passes through the top of the reagent compartment 6 is provided in the front surface of the assay cartridge 1 (Fig. 2), and a cap 28 is installed in the injection port 27. Furthermore, the electrodes 21 and 22, which are respectively exposed in the flow paths 18 and 19, are pole electrodes formed of stainless steel and protrude from the back side of the assay cartridge 1, as shown in Figs. 3 through 5.

When the assay cartridge 1 of the aforesaid construction is loaded in an analyzing unit described later, the sample within the sample receptacle 5 is measured by the rotating valve 12. The measured sample is mixed with a reagent supplied from the reagent compartment 6 to prepare the analysate.

After the hemoglobin concentration of the prepared analysate is measured in the mixture compartment 8, the prepared analysate is measured in the mixture measuring chamber 7. The measured analysate is subjected to the detector 9 and the number and size of the included white blood cells are measured.

### 2. Rotating Valve Structure and Operation

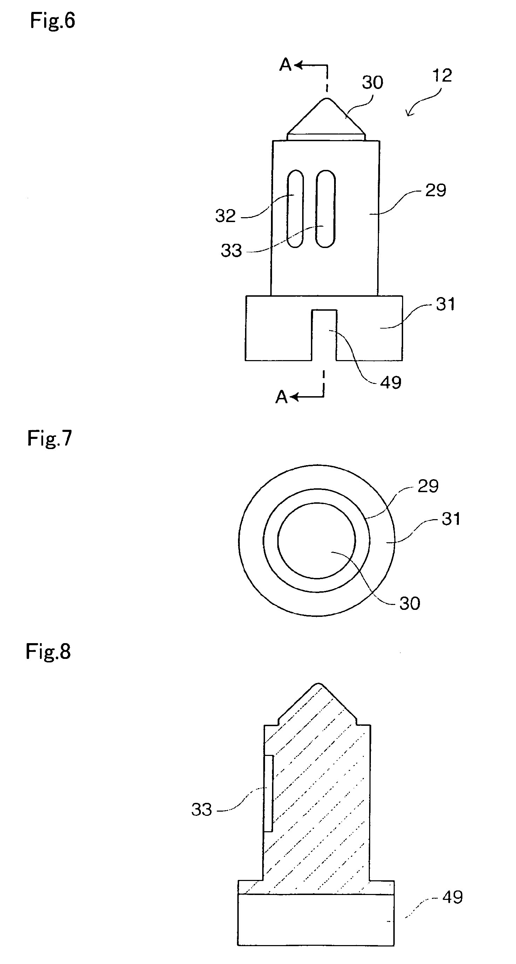

As shown in Figs. 6 through 8, the rotating valve 12 is provided with a cylinder 29, conical projection 30 extending upward from the cylinder 29, and a disk-shaped base 31 supporting the bottom end of the cylinder 29. Narrow channel-like first and second concavities 32 and 33 are formed in the axial direction of the cylinder 29 on the outer wall of the cylinder 29, and a channel 49 is formed in a direcxtion intersecting the axis on the bottom surface of the base. A drive source for rotating the rotating valve is connected to the channel 49 in a manner described later.

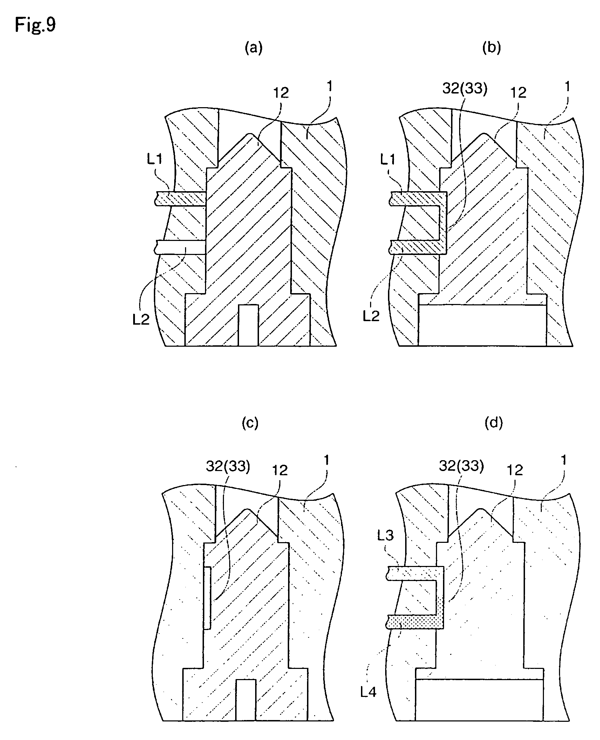

Fig. 9 illustrates the measuring operation and the operation of the rotating valve 12. As shown in the drawing, the rotating valve 12 is inserted into a valve receiving hole formed on the bottom of the assay cartridge 1.

Fig. 9(a) shows the condition when the two flow paths L1 and L2, which are formed within the assay cartridge 1, are blocked by the rotating valve 12.

When the rotating valve 12 is rotated to the position shown in Fig. 9(b), the flow paths L1 and L2 are connected through the first concavity 32 or second concavity 33, such that fluid is able to flow from the flow path L1 to the flow path L2. When the rotating valve 12 is rotated to the position shown in Fig. 9(c), the fluid flowing from the flow path L1 to the flow path L2 is cut off by the first concavity 32 or second concavity 33, that is, fluid is measured in a quantity matching the capacity of the first concavity 32 or second concavity 33.

When the rotating valve 12 is rotated to the position shown in Fig. 9(d), the first concavity 32 or second concavity 33 holding the fluid flow cut off in Fig. 9(c) is connected to separate flow paths L3 and L4, such that the measured fluid is mixed with the fluid flowing from the flow path L3 to the flow path L4. In this way the rotating valve 12 opens and closes the flow paths, and measures the fluid flow. The capacities of the first concavity 32 and second concavity 33 of the rotating valve 12 in the present embodiment, is 2 µL in both cases.

### 3. Structure of the Mixture Measuring Compartment

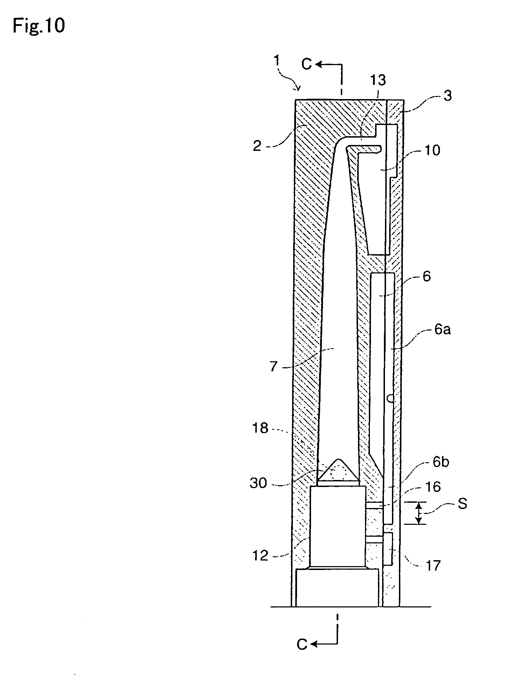

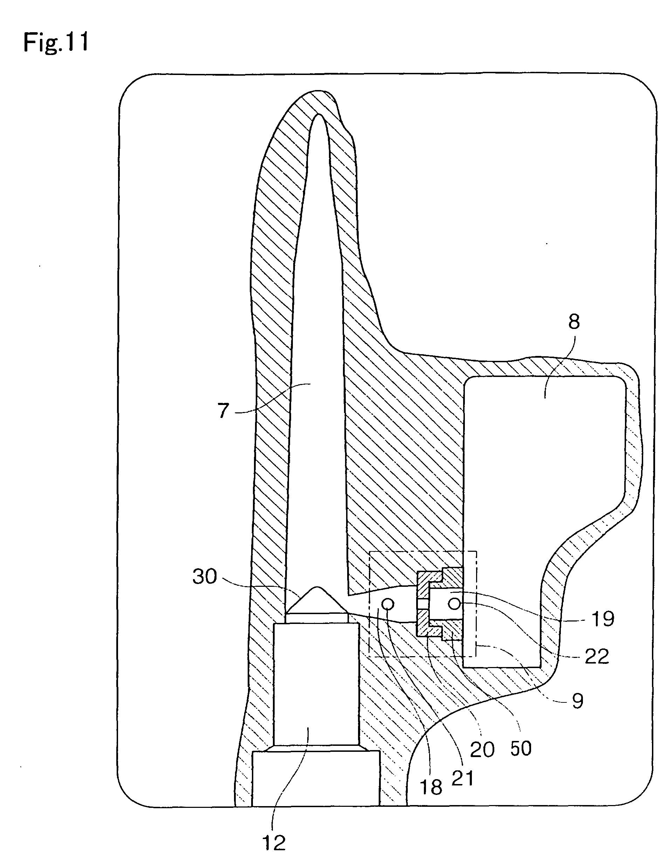

Fig. 10 is a cross section view on the B-B arrow of Fig. 2, and Fig. 11 is a cross section view of the essential part on the C-C arrow of Fig. 10. As shown in these drawings, the mixture measuring chamber 7 is shaped as a long and narrow hollow cylinder in a vertical direction and is tapered toward the top end and has a predetermined capacity; the top end is connected to the flow path 13, and the conical projection 30 of the rotating valve 12 extends from the bottom surface so as to seal the bottom surface of the mixture measuring chamber 7.

The mixture measuring chamber 7 has an opening on the inner wall near the base, and a flow path 18 is connected to this opening; the center axis of the mixture measuring chamber 7 and the flow path 18 mutually intersect at right angles. Furthermore, this opening is provided below the apex of the conical projection 30, such that the cross sectional area of the flow path 18 increases in conjunction with the separation from the opening.

A hole through the flow path 13 is for discharging excess fluid from the mixture measuring chamber 7, and a hole through the flow path 18 is for introducing fluid into the mixture measuring chamber 7.

When fluid (in the present embodiment, the fluid (analysate) is a mixture of blood and reagent) is measured in the mixture measuring chamber 7, the analysate is supplied to the mixture measuring chamber 7 through the flow path 18, the fluid level rises and the supply of the fluid is stopped when some of the fluid overflows into the overflow receptacle 10 through the flow path 13. In this way the analysate fills the mixture measuring chamber 7 and predetermined quantity of the analysate is measured. The predetermined quantity of the analysate has quantity matching the capacity of the mixture measuring chamber 7.

Then, the measured analysate is discharged to the flow path 18. The rotating valve 12 is provided at the bottom of the mixture measuring chamber 7, and at this time the center of the opening of the flow path 18 of the mixture measuring chamber 7 is lower than the apex of the conical projection 30 of the rotating valve 12, as shown in Fig. 11, the mixture measuring chamber 7 discharges the measured fluid without any remaining residue.

### 4. Structure of the Detector

As shown in Fig. 11, the detector 9 is provided with flow paths 18 and 19 connected in parallel to the same axis through the pellet (gate element) 20. The pellet 20 is formed by injection molding using a resin, and is formed as a disk with an annular projection on its exterior circumference and a small hole (through hole) 100 µm in diameter at its center. The pellet 20 is inserted into the flow path 19, and is fixed in place by an annular pellet fixing element 50. The small hole of the pellet 20 has the same axis as the flow paths 18 and 19.

As shall be described later, when the analysate flows from the mixture measuring chamber 7 to the mixture compartment 8, the detector 9 measures the change in electrical resistance of the analysate passing through the small hole of the pellet 20 by means of the electrodes 21 and 22. In this case, when the assay cartridge 1 is installed so as to have a predetermined angle θ relative to the gravity direction of the center axis of the small hole of the pellet 20 and flow paths 18 and 19, air bubbles contained in the analysate accumulate at the top (empty space formed by the pellet 20 and flow path 18) of the flow path 18 forward of the pellet 20, and do not adhere to the small hole of the pellet 20. Accordingly, the values measured by the electrodes 21 and 22 are not influenced by noise caused by the air bubbles. The angle θ may be within the range of 15° ≤ θ ≤ 90°; whereas the range of 45° ≤ θ ≤ 90° is desirable, and the value θ = 90° (horizontal) is ideal.

### 5. Structure of the Reagent Compartment

As shown in Fig. 10, the reagent compartment 6 is provided with a first compartment 6a, and disposed below the first compartment 6a is a second compartment 6b which has a smaller transverse cross section area than the first compartment 6a; the first compartment 6a communicates with the second compartment 6b, and the first compartment 6a has a decreasing transverse cross section as it approaches the second compartment 6b. Furthermore, a reagent supply port to the flow path 16 is provided at a distance S above the bottom end of the second compartment 6b, and the axis of the reagent supply port faces a horizontal direction, that is a direction intersecting the sequence direction of the first compartment 6a and second compartment 6b. Before using the assay cartridge 1, 1000 µL of diluting fluid (in the present embodiment, the reagent is a mixture of diluting fluid and hemolytic agent in a 2:1 ratio) is injected as a reagent through the reagent supply port into the reagent compartment 6.

Directly after the injection, the cap 28 is placed on the reagent injection port 27, and a tape seal is adhered to the pump connector 25 to prevent leakage of the dilution fluid. When the dilution fluid is injected into the reagent compartment 6, the air in the reagent compartment 6 is replaced by the dilution fluid, but the air in the flow path 16 remains and is not replaced by the dilution fluid since the reagent compartment 6 has the structure described above. Accordingly, an air gap is created between the outer wall of the rotating valve 12 and the dilution fluid within the reagent compartment 6, such that the dilution fluid does not leak to the outside through the outer wall of the rotating valve 12 even when the dilution fluid is stored for a long period in the reagent compartment 6.

### 6. Structure of the Mixture Compartment

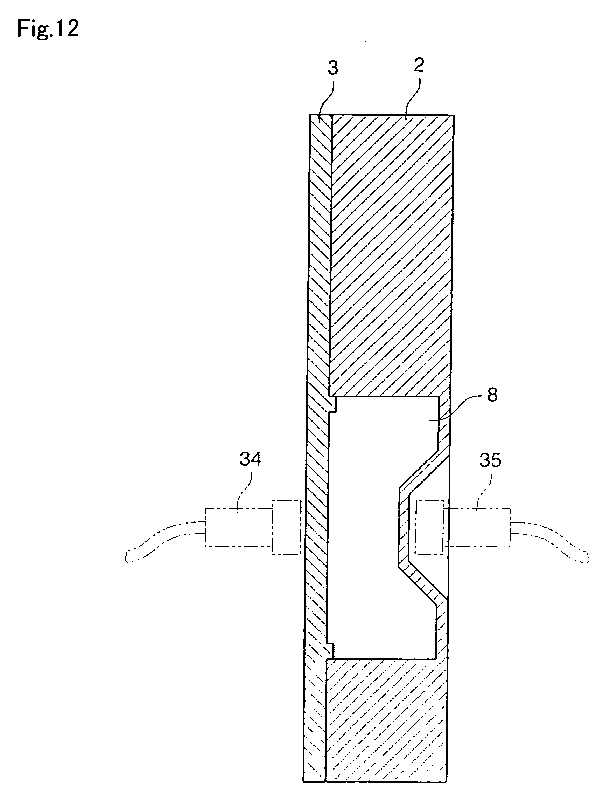

Fig. 12 is a cross section view on the D-D arrow of Fig. 2.

When the assay cartridge 1 is loaded into the analyzing unit 36 as described later, the mixture compartment 8 is interposed between a photoemitter 34 and a photoreceptor 35 of the analyzing unit 36, such that the transmitted light (transmitted light intensity) of the fluid accommodated in the mixture compartment 8 can be measured.

### 7. Structure of the Analyzing Unit

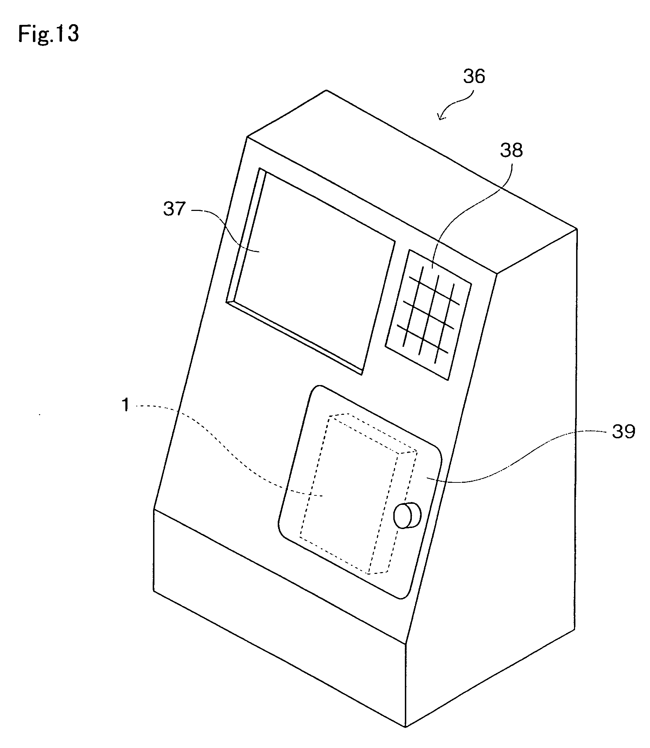

Fig. 13 is a perspective view of the exterior of the analyzing unit 36, which is provided with a liquid crystal display 37, keyboard 38, and door 39 on its front panel. To use the assay cartridge 1, the door 39 is opened and the assay cartridge 1 is loaded into the analyzing unit 36, then the door 39 is closed; this operation connects the electrodes 21 and 22 of the assay cartridge 1 to the analyzing unit 36, and connects the pump connectors 23, 24, 25, and 26, and arranges the photoemitter 34 and photoreceptor 35 as shown in Fig. 12. In this case, the center axes of the pellet 20 and flow paths 18 and 19 of the assay cartridge 1 are horizontal (at right angles to the gravity direction).

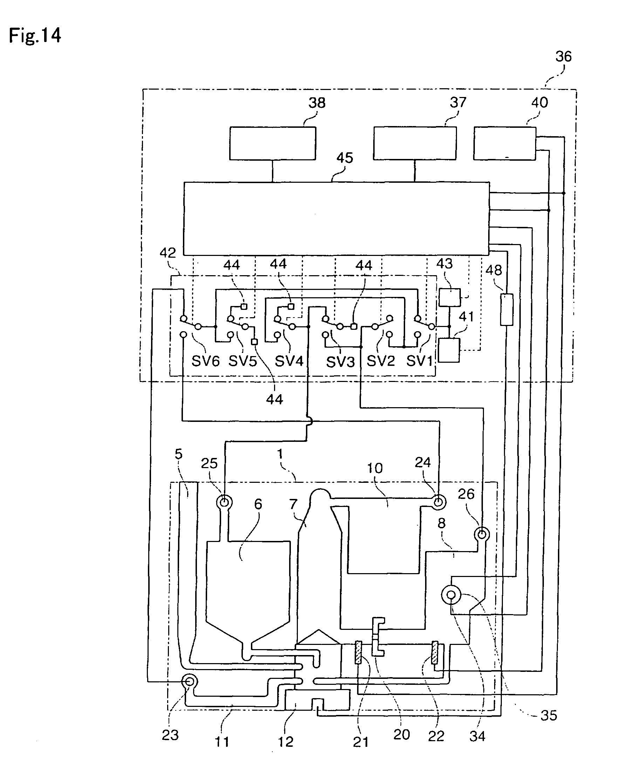

Fig. 14 is a block diagram of the analyzer produced by loading the assay cartridge 1 into the analyzing unit 36. In the drawing, the assay cartridge 1 is shown expanded in a planar view to facilitate understanding of the structure.

As shown in the drawing, a direct current constant-current power supply 40 provided in the analyzing unit 36 is connected to the electrodes 21 and 22 of the assay cartridge 1, and a syringe pump 41 is connected to the pump connectors 23 through 26 of the assay cartridge 1 through a valve unit 42. The output shaft of a stepping motor 48 is coupled to the channel 49 of the rotating valve 12 through a coupling not shown in the drawing.

The valve unit 42 is provided with two-way electromagnetic valves SV1 through SV6, and a pressure sensor 43 for detecting the pressure of the syringe pump 41 is connected to the outlet of the syringe pump 41. Valves SV3, SV4, and SV5 are respectively provided with air release openings 44. A controller 45 is provided with a microcomputer which includes a CPU, ROM, RAM and the like, and stores programs for calculating analysis results and driving the valves and motor.

The controller 45 receives the output from the keyboard 38 and the pressure sensor 43, and drives the syringe pump 41, the stepping motor 48, valves SV1 through SV6, and photoemitter 34.

The controller 45 counts the white blood cells based on the signals obtained from the electrodes 21 and 22, calculates the particle size and creates a particle size distribution, and further calculates the amount of hemoglobin based on the signals obtained from the photoreceptor 35. These results are displayed on the liquid crystal display 37.

### 8. Assay Operation

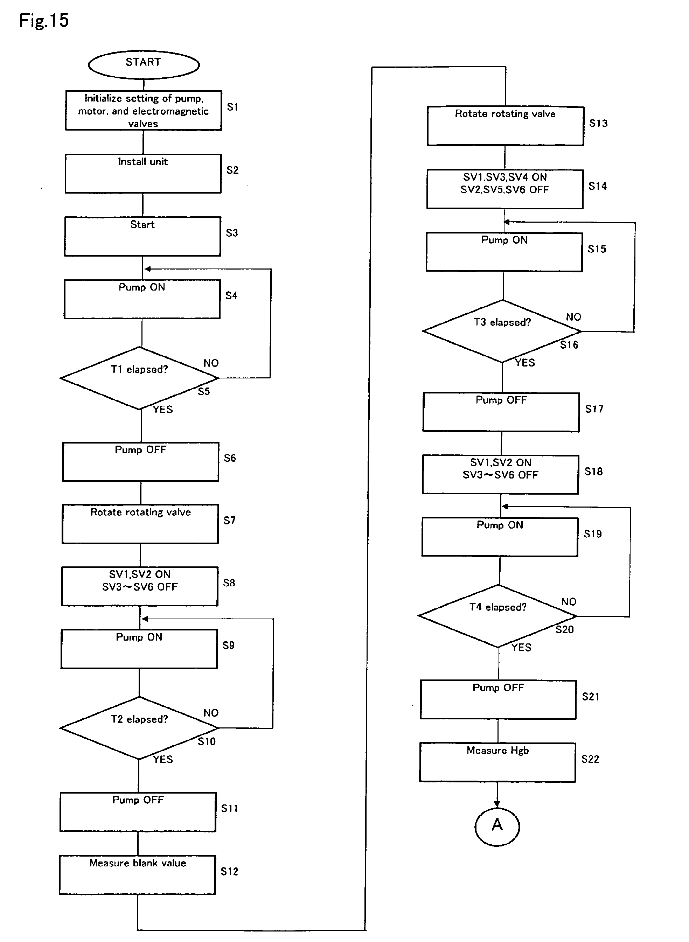

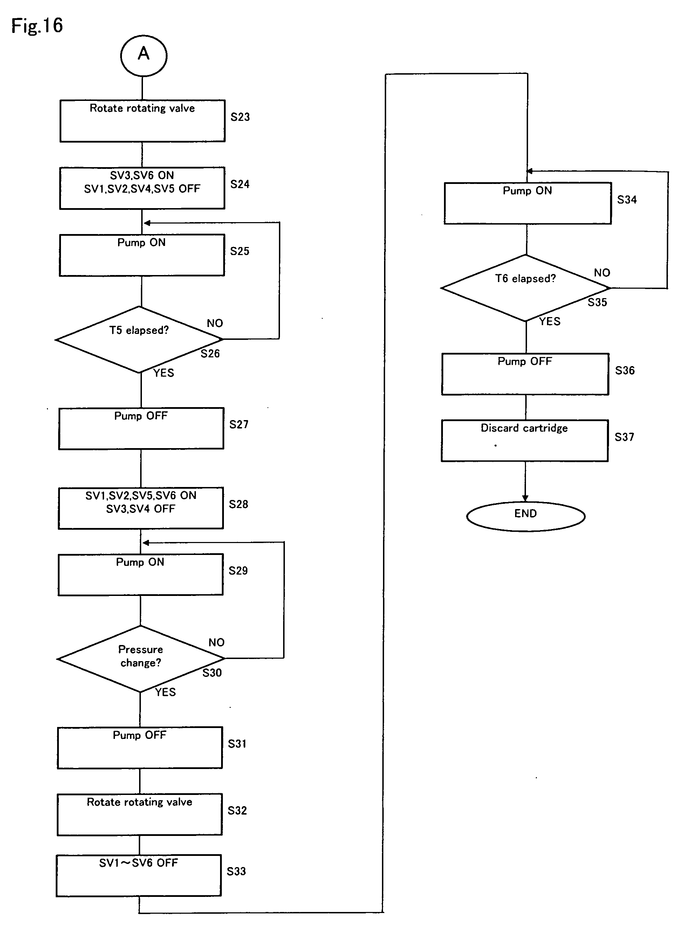

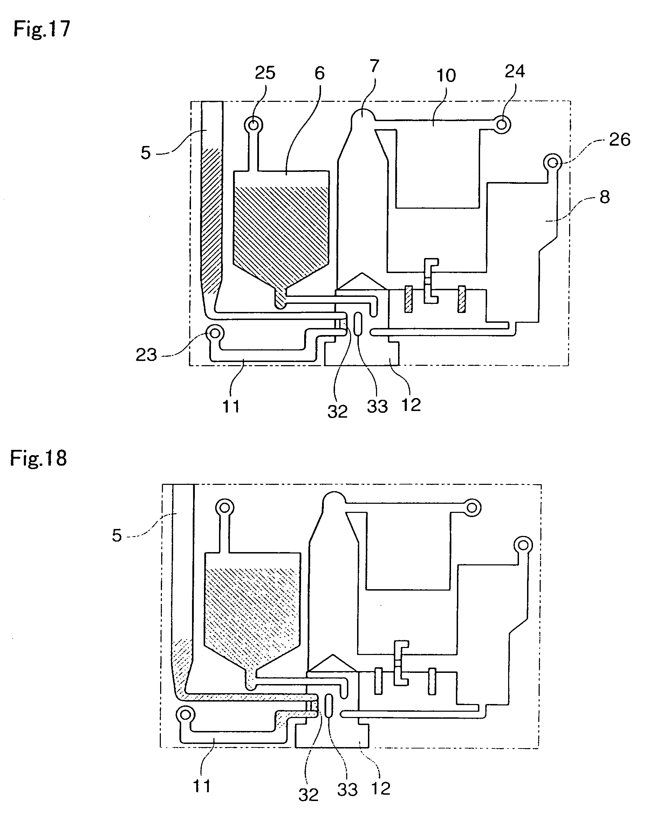

The operation of the analyzer shown in Fig. 14 is described below using the flow charts of Figs. 15 and 16 and the condition illustrations of Figs. 17 through 27.

First, in step S1 of Fig. 15, when initialization settings are specified to the analyzing unit 36 through the keyboard 38, the syringe pump 41, stepping motor 48 and valves SV1 through SV6 are set to the initial states.

At this time the valves SV1 through SV6 are all turned OFF, that is, set to the condition shown in Fig. 14.

Then, using an injection device or pipette, a user injects 10 to 150 µL of whole blood as a sample (specimen) into the sample receptacle 5 of the assay cartridge 1 accommodated beforehand in the reagent compartment 6. Alternatively, a capillary blood collection tube filled with suctioned whole blood may be inserted into the sample receptacle 5.

Next, a user removes the tape seal adhered to the pump connector 25 on the back side of the assay cartridge 1, opens the door 39 on the front panel of the analyzing unit 36, loads the assay cartridge 1 therein, and closes the door 39 (step S2).

At this time the rotating valve 12 of the assay cartridge 1 is connected to the sample receptacle 5 and the excess sample collector 11 through the first concavity 32, as shown in Fig. 17.

Then, the user specifies the [start] operation from the keyboard 38 (step S3).

In this way, when the syringe pump 41 has suctioned for a time T1 (steps S4 through S6), the sample migrates from the sample receptacle 5 through the first concavity 32 to the excess sample collector 11, as shown in Fig. 18.

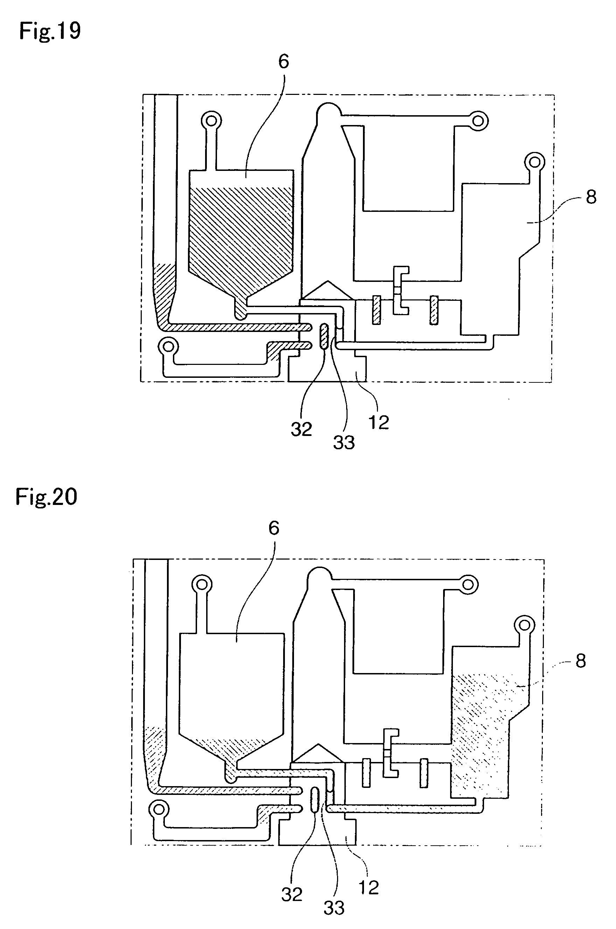

Then, the rotating valve 12 is rotated through a predetermined angle, 2 µL of sample is cut off and measured by the first concavity 32, as shown in Fig. 19.

The rotating valve 12 simultaneously connects the sample compartment 6 and mixture compartment 8 through the second concavity 33 (step S7).

Then, the valves SV1 and SV2 are turned ON, and the valves SV3 through SV6 are turned OFF (step S8), and when the syringe pump 41 has suctioned for a predetermined time T2 (steps S9 through S11), dilution fluid migrates from the reagent compartment 6 through the second concavity 33 to the mixture compartment 8, as shown in Fig. 20. Here, the photoemitter is lighted, and a hemoglobin concentration blank value is measured by the photoreceptor 35 (step S12).

Subsequently, when the rotating value 12 is rotated through a predetermined angle, the rotating valve 12 connects the reagent compartment 6 and the mixture compartment 8 through the first concavity 32 (step S13).

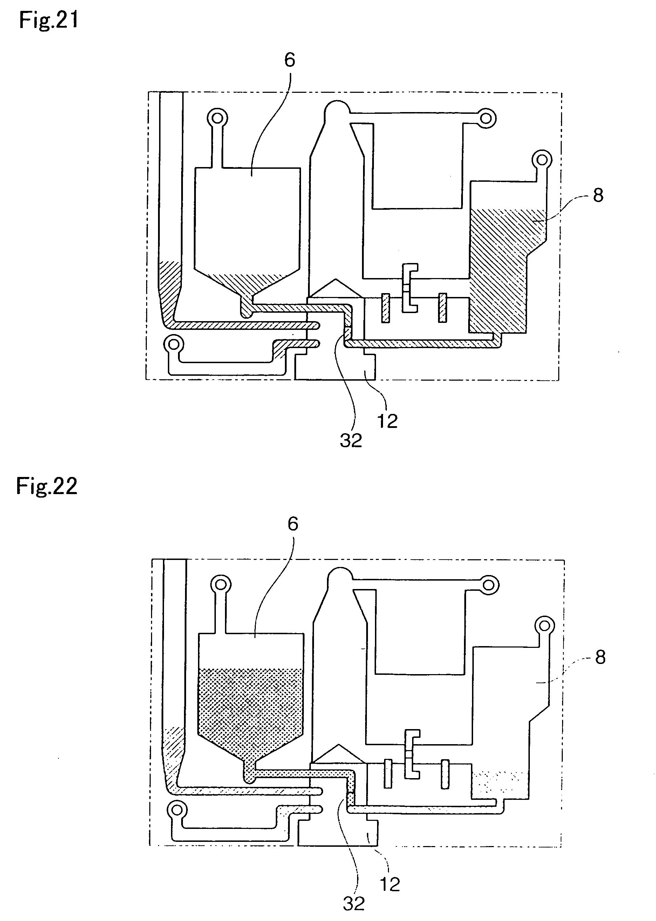

Then, the valves SV1, SV3, and SV4 are turned ON, and valves SV2, SV5 and SV6 are turned OFF (step S14), and when the syringe pump 41 has suctioned for a predetermined time T3 (step S15 through S17), the sample accommodated in the first concavity 32 migrates to the mixture compartment 8 and the reagent compartment 6, as shown in Fig. 22.

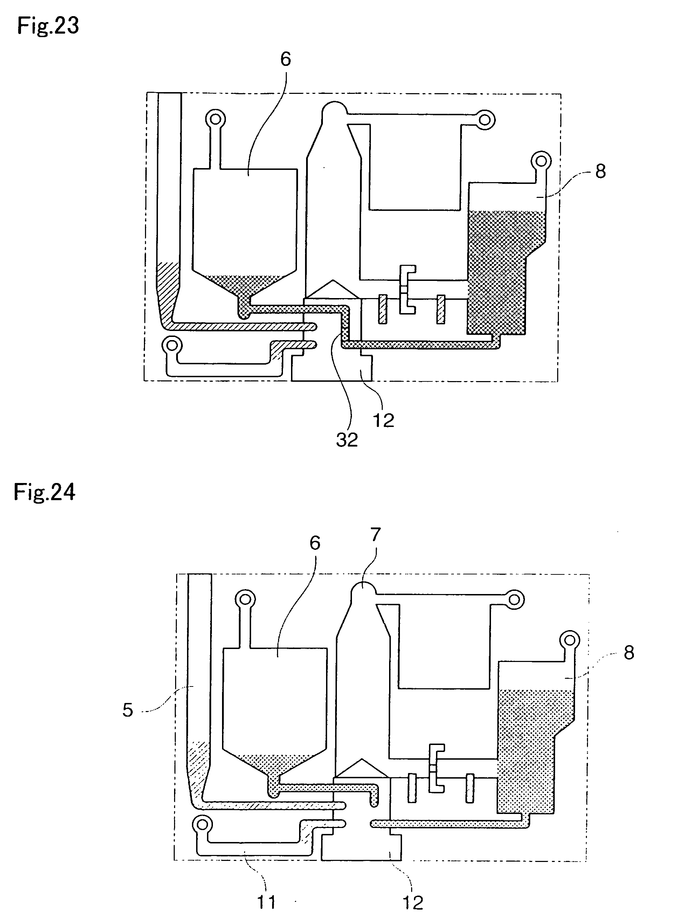

Thereafter, the valves SV1 and SV2 are turned ON, and valves SV3 through SV6 are turned OFF, and when the syringe pump 41 suctions for a predetermined time T4 (steps S19 through S21), the sample and dilution fluid again migrate to the mixture compartment 8, as shown in Fig. 23, and the sample is thoroughly diluted by the dilution fluid. That is, the analysate prepared by diluting the sample with the dilution fluid is stored in the mixture compartment 8. Then, the photoemitter 34 is again lighted and the hemoglobin concentration is again measured by the photoreceptor 35 (step S22).

When the rotating valve 12 is rotated through a predetermined angle, the rotating valve 12 completely blocks the flow path between the sample receptacle 5 and the excess sample collector 11, and the flow path between the reagent compartment 6 and the mixture compartment 8 (step S23).

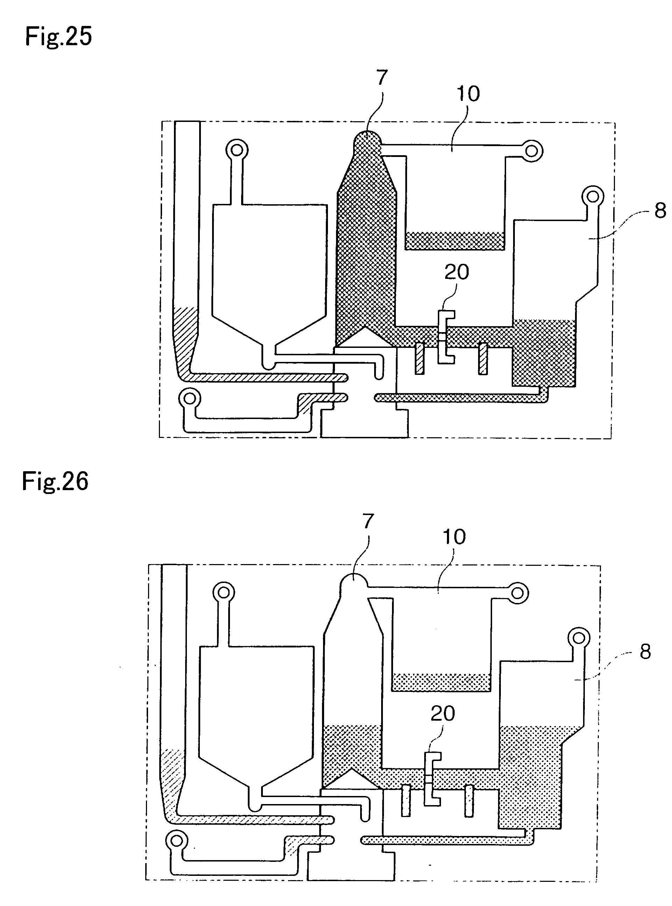

Then, the valves SV3 and SV6 are turned ON, and valves SV1, SV2, SV4, and SV5 are turned OFF (step S24), the syringe pump 41 suctions for a predetermined time T5 (steps S25 through S27), and the analysate in the mixture compartment 8 migrates to the mixture measuring chamber 7 through the pellet 20, as shown in Fig. 25, and after the mixture measuring chamber 7 is filled, some analysate overflows to the overflow collector 10. In this way analysate is measured in a quantity matching the capacity of the mixture measuring chamber 7.

Thereafter, the valves SV1, SV2, SV5, and SV6 are turned ON, and valves SV3 and SV4 are turned OFF, and when the syringe pump 41 applies suction, the analysate in the mixture measuring chamber 7 starts to migrate to the mixture compartment 8 through the pellet 20, as shown in Fig. 26 (steps S28 and S29).

At this time the change in the electrical resistance of the analysate passing through the pellet 20 is detected by the electrodes 21 and 22 simultaneously with the start of suction by the syringe pump 41, and when all the analysate measured by the mixture measuring chamber 7 has passed through the pellet 20, the suction pressure of the syringe pump 41 quickly changes. This change in pressure is detected by the pressure sensor 43, and the suction of the syringe pump 41 is stopped (steps S30 and S31). That is, in this way the number and size of all the white blood cells are measured in the analysate quantity matching the capacity of the mixture measuring chamber 7.

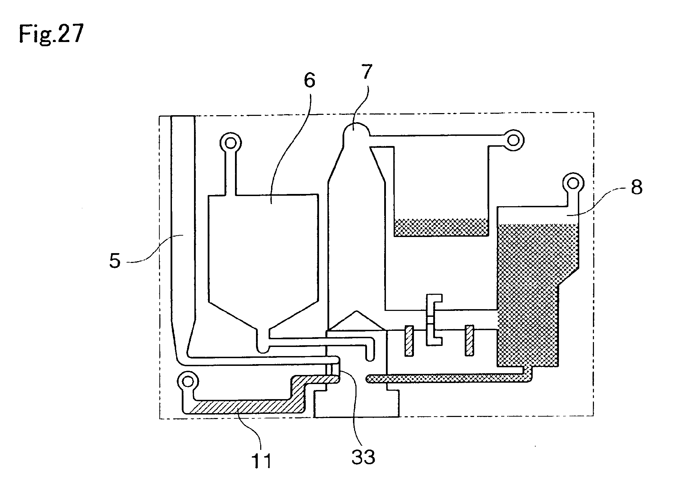

When the rotating valve 12 is rotated through a predetermined angle, the rotating valve 12 connects the sample receptacle 5 and the excess sample collector 11 through the second concavity 33 while blocking the flow path between the reagent compartment 6 and the mixture compartment 8, as shown in Fig. 27 (step S32).

All the valves SV1 through SV6 are turned OFF (initial setting), and when the syringe pump 41 is suctioned for a predetermined time T6, all the sample stored in the sample receptacle 5 migrates to the excess sample collector 11 (steps S33 through S36).

The user then removes the assay cartridge 1 from the analyzing unit 36 and discards the cartridge in this state (step S37).

### 11. White Blood Cell and Hemoglobin Measurements

As shown in Fig. 14, when a constant current is supplied from the direct current constant current power supply 40 through the electrodes 21 and 22 to the analysate cut off by the pellet 20 which is provided with a small hole, the resistance between the electrodes 21 and 22 is dependent on the inherent resistance of the liquid component of the analysate.

When white blood cells pass through the small hole, there is a change in the electrical resistance between the electrodes 21 and 22 since the liquid component is eliminated by the volume of the white blood cells, and this change can be detected as a pulse voltage generated between the electrodes 21 and 22. Accordingly, the controller 45 counts the number of white blood cells from the number of pulses. Since the height of the pulse is proportional to the volume of the particle, the controller 45 detects the height of the pulse, calculates the spherical equivalent of the white blood cell, and creates a particle size distribution. The controller 45 determines the transmission light intensity (blank value) of the dilution fluid obtained by the photoreceptor 35, and the light absorption of the analysate from the transmission light intensity of the analysate using well known methods, and calculates the amount of hemoglobin in the sample from the determined light absorption.

Although the present embodiment has been described in terms of an analyzer including an analyzing unit 36 and an assay cartridge 1 removably loaded in the analyzing unit 36, the present invention is not limited to this arrangement inasmuch as a hemocytometer provided with a non-user-detachable detector may include a conical projection 30 and mixture measuring chamber 7. The present invention is also applicable to urine analyzers for analyzing tangible components in urine. Furthermore, the present invention is applicable to industrial analyzers for analyzing organic powders such as powdered food, and inorganic powers such as toner and pigment.

Although blood and a fluid mixture of reagent including dilution fluid and hemolytic agent are used as the analysate in the present embodiment, the present invention is not limited to this arrangement inasmuch as blood diluted with dilution fluid, blood subjected to hemolysis with hemolytic agent, and suspension fluid formed by powder particles suspended in a suitable fluid also may be used.

Although the conical projection 30 is integratedly formed with the rotating valve 12 in the present embodiment, the present invention is not limited to this arrangement inasmuch as the conical projection may also be integratedly formed with the mixture measuring chamber 7.

A flow cell and optical elements for detecting an optical signal from the analysate flowing in the flow cell may also be used as the detector. The optical signal detected by such a detector may be a scattered light signal, fluorescent light signal or the like.

## Claims

1. An analyzer comprising:
an assay cartridge comprising a mixture measuring chamber for receiving a mixture of a sample and a dilution fluid, and a detector for detecting a signal from the mixture supplied from the mixture measuring chamber, the mixture measuring chamber having a predetermined capacity, and an amount of the mixture supplied to the detector being substantially equal to the capacity of the mixture measuring chamber; and
an analyzing unit comprising a controller for analyzing the signal detected by the detector;
wherein the assay cartridge is detachably mountable to the analyzing unit.

2. The analyzer of Claim 1, wherein the mixture measuring chamber comprises an inlet for introducing mixture into the interior, and a discharge port for discharging excess mixture; and
wherein the assay cartridge further comprises a compartment for accommodating excess mixture discharged from the discharge port.

3. The analyzer of Claim 2, wherein the mixture migrates to the detector through the inlet from the inside of the mixture measuring chamber.

4. The analyzer of Claim 1, wherein the detector comprises a hole for the passage of the mixture, and electrodes arranged with the hole interposed therebetween.

5. The analyzer of Claim 1, wherein the analyzing unit further comprises a pump for migrating the mixture from the mixture measuring chamber to the detector.

6. The analyzer of Claim 1, wherein the detector detects a signal from all of the mixture supplied from the mixture measuring chamber.

7. The analyzer of Claim 1, wherein the mixture measuring chamber comprises a projection disposed on the interior base and extending upward from the base.

8. An assay cartridge detachably mountable to an analyzer, the assay cartridge comprising:
a mixture measuring chamber for receiving a mixture of a sample and a dilution fluid, the mixture measuring chamber having a predetermined capacity; and
a detector for detecting a signal from the mixture supplied from the mixture measuring chamber, an amount of the mixture supplied to the detector being substantially equal to the capacity of the mixture measuring chamber.

9. The assay cartridge of Claim 8, wherein the mixture measuring chamber comprises an inlet for introducing the mixture into the interior, and a discharge outlet for discharging excess mixture; and wherein the assay cartridge further comprises a compartment for accommodating excess mixture discharged from the discharge outlet.

10. The assay cartridge of Claim 9, wherein the mixture migrates from the interior of the mixture measuring chamber to the detector through the inlet.

11. The assay cartridge of Claim 8, wherein the detector comprises a hole for the passage of the mixture, and electrodes arranged with the hole interposed therebetween.

12. The assay cartridge of Claim 8, wherein the detector detects a signal from all of the mixture supplied from the mixture measuring chamber.

13. The assay cartridge of Claim 8, wherein the mixture measuring chamber comprises a projection disposed on the interior base and extending upward from the base.

14. An analyzing method comprising:
a step of mounting an assay cartridge, which comprises a mixture measuring chamber having a predetermined capacity and a detector for detecting a signal from a mixture of a sample and a reagent, in an analyzer which comprises a controller for analyzing the signal detected by the detector;
a step of introducing the mixture to the mixture measuring chamber;
a step of supplying the mixture from the mixture measuring chamber to the detector;
a step of detecting a signal from the mixture by the detector; and
a step of analyzing the signals by the controller,
wherein an amount of the mixture supplied to the detector is substantially equal to the capacity of the mixture measuring chamber.

15. The analyzing method of Claim 14, further comprising a step of removing the assay cartridge from the analyzer.

16. The analyzing method of Claim 14, wherein the step of receiving the mixture comprises a step of overflowing mixture from the mixture measuring chamber.

17. The analyzing method of Claim 14, wherein the step of signal detection comprises:
a step of passing mixture through a hole;
a step of applying an electric current to the mixture passing through the hole; and
a step of acquiring the potential difference of the mixture passing through the hole.

18. An analyzer comprising:
an assay cartridge, which comprises a mixture receptacle having an opening on the inner wall near the base and capable of accommodating a mixture of sample and reagent; a projection provided on the base of the mixture receptacle and extending upward from the base; and a detector for detecting a signal from the mixture supplied through the opening; and
an analyzing unit, which comprises a controller for analyzing the signal detected by the detector;
wherein the assay cartridge is detachably mountable to the analyzing unit.

19. The analyzer of Claim 18, wherein the projection is approximately conical.

20. The analyzer of Claim 18, wherein the opening is arranged so as to position the center of opening below the apex of the projection.

21. The analyzer of Claim 18, wherein the detector comprises a connecting flow path communicating with the opening and intersecting the center axis of the projection at substantially right angles.

22. The analyzer of Claim 21, wherein the connecting flow path has a cross section area that increases in conjunction with the separation from the opening.

23. The analyzer of Claim 21, wherein the mixture receptacle and the connecting flow path are integratedly formed.

24. The analyzer of Claim 18, wherein the detector comprises a partition having a hole for the passage of the mixture, and electrodes arranged with the hole interposed therebetween.

25. The analyzer of Claim 18, wherein the mixture receptacle has a long and narrow shape in the vertical direction and a circular transverse cross section.

26. The analyzer of Claim 18, wherein the assay cartridge further comprises a measuring valve for measuring a sample; and the projection is integratedly formed with the measuring valve.

27. An assay cartridge detachably mountable to an analyzer, the assay cartridge comprising:
a mixture receptacle capable of accommodating a mixture of a sample and reagent, and comprising an opening on the inner wall near the base;
a projection provided on the base of the mixture receptacle and extending upward from the base; and
a detector for detecting a signal from the mixture supplied through the opening.
